(19)

Europäisches Patentamt
European Patent Office
Office européen des brevets

(11) **EP 3 806 114 B1**

(12) **EUROPEAN PATENT SPECIFICATION**

(45) Date of publication and mention
of the grant of the patent:
**01.06.2022 Bulletin 2022/22**

(21) Application number: **19202162.4**

(22) Date of filing: **09.10.2019**

(51) International Patent Classification (IPC):
**B01D 53/26** (2006.01)   **H01F 27/14** (2006.01)
**B01D 53/04** (2006.01)

(52) Cooperative Patent Classification (CPC):
**H01F 27/14; B01D 53/0454; B01D 53/261;**
B01D 53/0462; B01D 2259/40009;
B01D 2259/40084; B01D 2259/40096

(54) **A BREATHER DEVICE FOR A POWER ELECTRICAL APPARATUS**

ENTLÜFTERVORRICHTUNG FÜR EINE ELEKTRISCHE LEISTUNGSEINRICHTUNG

DISPOSITIF DE RENIFLARD POUR UN APPAREIL ÉLECTRIQUE DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.04.2021 Bulletin 2021/15**

(73) Proprietor: **COMEM S.p.A.**
**36054 Montebello Vicentino (VI) (IT)**

(72) Inventors:
• **Giannone, Riccardo**
  **I-36077 Altavilla Vicentina (VI) (IT)**
• **Medea, Francesco**
  **I-35040 Sant'Elena (PD) (IT)**

(74) Representative: **Burchielli, Riccardo**
**Barzano & Zanardo Roma S.p.A.**
**Via Piemonte 26**
**00187 Roma (IT)**

(56) References cited:
**RU-U1- 184 113    US-A- 4 546 442**

• **KUMAR SHAILESH ET AL: "Modelling of breather
for transformer health assessment", IET
SCIENCE, MEASUREMENT AND TECHNOLOGY,
THE INSTITUTION OF ENGINEERING AND
TECHNOLOGY, MICHAEL FARADAY HOUSE, SIX
HILLS WAY, STEVENAGE, HERTS. SG1 2AY, UK,
vol. 11, no. 2, 1 March 2017 (2017-03-01), pages
194-203, XP006060359, ISSN: 1751-8822, DOI:
10.1049/IET-SMT.2016.0259**
• **SHAILESH KUMAR ET AL: "Study of Long Term
Drift of Aluminum Oxide Thin Film Capacitive
Moisture Sensor", IEEE TRANSACTIONS ON
DEVICE AND MATERIALS RELIABILITY., vol. 18,
no. 2, 1 June 2018 (2018-06-01), pages 180-188,
XP055682826, US ISSN: 1530-4388, DOI:
10.1109/TDMR.2018.2813397**

**Description**

The present invention relates to a breather device for a power electrical apparatus intended for use in electric power transmission and distribution installations, such as a power transformer, a load tap changer, a choke, and the like.

As it is known, breather devices are generally used in power electrical apparatuses equipped with expansion vessels.

These expansion vessels (for example, the so-called conservators in the case of power transformers) have the function of compensating for unavoidable volume changes of the insulating liquid (e.g. insulating oil) used in such electrical apparatuses, which are mostly due to temperature fluctuations.

In general, an expansion vessel has its internal volume in fluid-dynamic communication with the tank of the power electrical apparatus and with the external atmosphere in such a way to be partially filled with insulating liquid and air that, in some cases, may be in direct contact. When it expands, the insulating liquid partially fills the expansion vessel and pushes air out of this latter whereas, when it reduces its overall volume, the insulating liquid retracts from the expansion vessel and air is sucked from the external environment.

In order to prevent deterioration of dielectric characteristics of the insulating fluid (e.g. the reduction of the breakdown voltage) due to contact with humid air, a power electrical apparatus is normally equipped with a breather device operatively coupled with the expansion vessel so that air expelled from or breathed in the expansion vessel is forced to pass through said breather device.

A breather device is normally filled with air-drying salts suitable to absorb moisture from air passing therethrough. In this way, accumulation of moisture in the expansion vessel and, more in general, in the tank of the power electrical apparatus is avoided or remarkably reduced.

As it is known, after a given number of breathing cycles, air-drying salts contained in a breather device may reach a saturation condition, in which they are no more capable of effectively absorbing moisture from circulating air. In this case, the breather device cannot carry out its dehumidifying functionalities anymore.

Therefore, saturated air-drying salts have to be replaced with fresh moisture-absorbing material or, alternatively, they may be subject to a heating regeneration process to restore their air-drying capabilities.

In general, the check of the saturation condition of air-drying salts in a breather device represents a time-consuming and expensive maintenance activity that requires the intervention of specialized personnel.

Also replacing or re-conditioning interventions of exhausted air-drying salts represent time-consuming activities that would be desirable to carry out only when really necessary.

In order to mitigate these issues, breather devices equipped with suitable detection devices to automatically detect the operative conditions of air-drying salts have been developed over the years.

According to some solutions of the state of the art, breather devices are equipped with detection devices including load-cells to measure the weight of air-drying salts to determine their saturation condition. An example of these breather devices is disclosed in US2014/0053723A1.

Other breather devices of the state of the art are equipped with detection devices designed to check the colour of air-drying salts to determine their saturation condition. An example of these detection devices is disclosed in EP3154070. Another breather device equipped with a capacitive moisture sensor to monitor the condition of silica-gel inside the breather is disclosed in XP006060359.

Breather devices of the above-mentioned types generally perform their functions in a satisfying way. However, often, they are cumbersome to install and relatively expensive to manufacture at industrial level.

The main aim of the present invention is providing a breather device, which make it possible to overcome or mitigate the aforementioned problems of the known art.

In the context of this aim, an object of the present invention is providing a breather device arranged in such a way to allow an easy detection of a possible saturation condition of the moisture absorbing substance (e.g. air-drying salts).

Another object of the present invention is providing a breather device having a very compact structure and a very small size, so as to be easy to install on the field.

Yet another object of the present invention is providing a breather device easy to manufacture at industrial level, at competitive costs.

This aim and these objects, together with other objects that will become evident from the following description and accompanying drawings, are achieved, according to the present invention, by a breather device, according to claim 1 and the related dependent claims set out below.

In a general definition, the breather device according to the invention comprises an air demoisturizer unit including one or more tanks having an internal volume accommodating a moisture absorbing substance and adapted to be in fluid-dynamic communication with the external environment and with the expansion vessel of a power electrical apparatus.

The breather device, according to the invention, comprises one or more capacitive electric arrangements accommodated in said tanks.

Each capacitive electric arrangement comprises first and second electrodes arranged spaced one from another within the internal volume of a corresponding tank and a quantity of said moisture absorbing substance between said first and second electrodes.

Said breather device further comprises or is operatively coupleable with a detection device. Said detection device is electrically connectable with the capacitive electric arrangement of each tank and it is adapted to provide at least first measurement data indicative of the equivalent capacitance of said capacitive electric arrangement.

Preferably, said detection device is comprised in the breather device.

Preferably, said detection device comprises a detection circuit comprising an input port adapted to receive an input voltage from a voltage source, an output port electrically connectable with the electrodes of a capacitive electric arrangement and adapted to provide an output voltage in response to receiving said input voltage at said input terminals and a resistive circuit electrically connected with said input port and said output port.

Preferably, said detection device comprises a control unit adapted to provide said input voltage at the input port of said detection circuit and adapted to acquire detection data indicative of the output voltage at the output port of said detection circuit.

Said control unit further comprises data processing means configured to calculate said first measurement data basing on said detection data.

Preferably, said data processing means are configured to carry out one or more measuring procedures to calculate said first measurement data basing on said detection data. Conveniently, said measuring procedures include measuring a time constant characteristic of a RC circuit assembly formed by said detection circuit and a capacitive electric arrangement electrically connected one with another.

Preferably, said data processing means are configured to carry out a measuring procedure comprising the following steps:

- acquiring a first instant, at which an input voltage having a predefined voltage value is received at the input port of said detection circuit;
- acquiring a second instant, at which an output voltage at the output port of said detection circuit reaches a first voltage threshold value. Said first voltage threshold value is calculated basing on the predefined voltage value of said input voltage, according to the following relation $V\tau1 = 0.63 \cdot V_M$, where $V\tau1$ is said first voltage threshold value and $V_M$ is the predefined value of said input voltage;
- calculating a time value indicative of the time difference between said first and second instants;
- basing on said time value, calculating a measurement value indicative of the equivalent capacitance of the capacitive electric arrangement electrically connected with said detection circuit.

Preferably, said data processing means are configured to carry out a measuring procedure comprising the following steps:

- acquiring a third instant, at which the input voltage having a predefined voltage value is no more received at the input port of said detection circuit;
- acquiring a fourth instant, at which the output voltage at the output port of said detection circuit reaches a second voltage threshold value. Said second voltage threshold value is calculated basing on the predefined voltage value of said input voltage, according to the following relation $V\tau2 = 0.37 \cdot V_M$, where $V\tau2$ is said second voltage threshold value and $V_M$ is the predefined value of said input voltage;
- calculating a time value indicative of the time difference between said third and fourth instants;
- basing on said time value, calculating a measurement value indicative of the equivalent capacitance of the capacitive electric arrangement electrically connected with said detection circuit.

Preferably, said data processing means are configured to calculate second measurement data indicative of the level of saturation of the moisture absorbing substance contained in a tank of said breather device basing on said first measurement data.

According to an aspect of the invention, said detection device comprises a sensor element adapted to detect the output voltage provided by said detection circuit at said output port and provide detection signals indicative of said output voltage to said control unit.

According to an alternative aspect of the invention, said control unit is adapted to directly receive the output voltage provided by said detection circuit at said output port.

According to an aspect of the invention, said control unit comprises a voltage generation module controlled by said data processing means and adapted to generate the input voltage received by said detection circuit at said input port.

According to an alternative aspect of the invention, said data processing means are adapted to directly generate the input voltage received by said detection circuit at said input port.

In yet a further aspect, the present invention relates to a power electrical apparatus, according to the following claim 13 and the related dependent claims.

Further characteristics and advantages of the present invention will be more apparent with reference to the description given below and to the accompanying figures, provided purely for explanatory and non-limiting purposes, wherein:

- Fig. 1 schematically illustrates a power transformer including a breather device, according to the present invention;
- Figs. 2-3 schematically illustrate an embodiment of the breather device according to the invention;
- Figs. 4-5 schematically illustrate another embodiment of the breather device according to the invention;
- Figs. 6-9 schematically illustrate the operation of a detection device comprised in or operatively associated with the breather device according to the invention.

With reference to the aforesaid figures, the breather device 1, according to the invention, will now be described in details.

In the following detailed description, identical components or elements are generally indicated by same reference numerals, regardless of whether they are shown in different embodiments. In order to clearly and concisely disclose the invention, the drawings may not necessarily be to scale and certain features of the invention may be shown in a schematic form.

For the sake of clarity, it is specified that, within the scope of the present invention, the expression "in fluid-dynamic communication" referred to some parts or components of the breather device of the invention has to be intended with reference to an operating condition, in which a fluid (e.g. air) can flow between said parts (through suitable ducts or ports).

The breather device 1 of the invention is intended for being employed in a power electrical apparatus equipped with an expansion vessel.

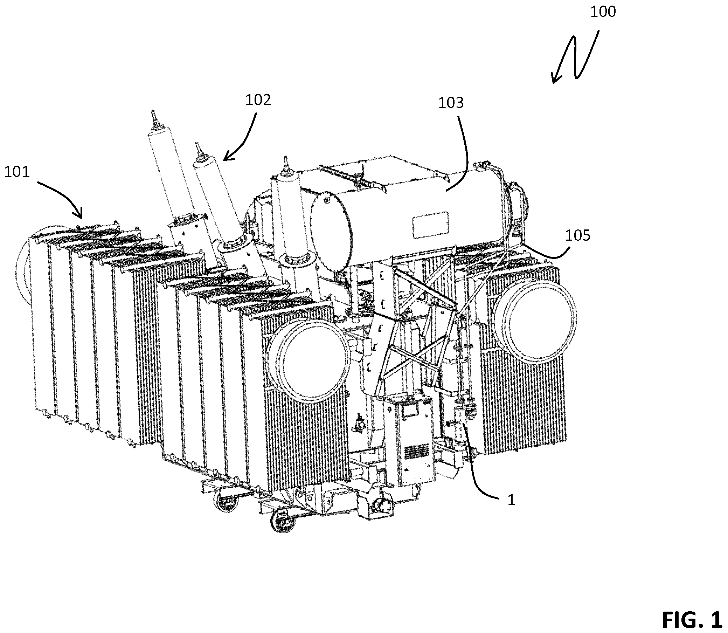

In figure 1, a power transformer 100 for electric power transmission and distribution installations (i.e. operating at voltages higher than 1 kV AC) is schematically shown.

The power transformer 100 comprises a tank section 101 filled with a liquid having cooling and electrical insulation properties, e.g. mineral, vegetal, ester or silicone oil (here referred to as "insulating liquid" for the sake of brevity).

Some components of the power transformer (e.g. the magnetic core and the related windings) are accommodated within the tank 101 and are at least partially immersed in the insulating liquid.

Other components of the power transformer 100, such as the electric bushes 102, are fixed on an external wall of the tank section 101.

The power transformer 100 comprises an expansion vessel or conservator 103 formed by a container fixed on an external wall of the tank section 101 and in fluid-dynamic communication with said tank through a suitable duct arrangement (not shown).

The conservator 103 is basically aimed at allowing expansion of the insulating liquid contained in the tank section 101 into its internal volume, depending on the operating conditions of said insulating liquid.

In normal conditions, the conservator 103 is partially filled with insulating liquid and air. The conservator 103 is in fluid-dynamic communication with the external environment in such a way to absorb or expel air from or to the atmosphere in response to the expansion or retraction of the insulating liquid into or from its internal volume.

In order to put the conservator 103 in fluid-dynamic communication with the external environment, the power transformer 100 comprises one or more breather devices and one or more ducts 105 operatively coupling the conservator 103 with said breather devices.

In figure 1, the power transformer 100 is shown as comprising two breather devices, each coupled with the conservator 103 with a corresponding duct. However, according to possible embodiments of the invention, the power transformer 100 may comprise a single breather device or three or more breather devices, according to the needs.

In general, most of the components of a power electrical apparatus 100 suitable for being equipped with a breather device 1 of the invention (figure 1) may be of known type and they will not be here described in further details for the sake of brevity.

The breather device 1 of the invention is now described in more details.

In general, the breather device 1 has a shaped hollow body, preferably with an elongated geometry (e.g. cylindrical).

At a first side, the breather device 1 comprises an outlet portion 4 including an outlet opening intended to be in fluid-dynamic communication with the expansion vessel 103 of the power electrical apparatus 100, when the breather device is installed on the field.

Preferably, the outlet portion 4 includes a suitable flange element that may be coupled with a suitable pipe 105 of the power electrical apparatus 100.

At a second side, preferably opposite to said first side, the breather 1 comprises an inlet portion 5 including an inlet opening, through which air coming from or directed to the external environment can pass.

As it is aimed at dehumidifying air to be supplied to the expansion vessel, the breather device 1 comprises an air demoisturizer unit 2.

Conveniently, the demoisturizer unit 2 is arranged between the above-mentioned inlet portion 5 and outlet portion 4.

Preferably, the demoisturizer unit 2 comprises a shaped enclosure 29, preferably with an elongated geometry (e.g. cylindrical).

According to the invention, the demoisturizer unit 2 includes one or more shaped tanks 20, preferably with an elongated geometry (e.g. cylindrical).

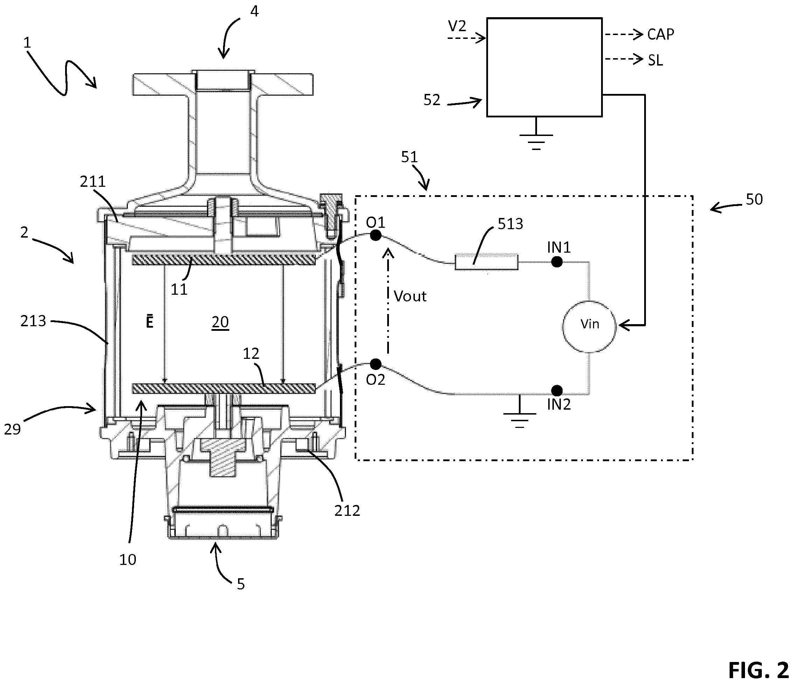

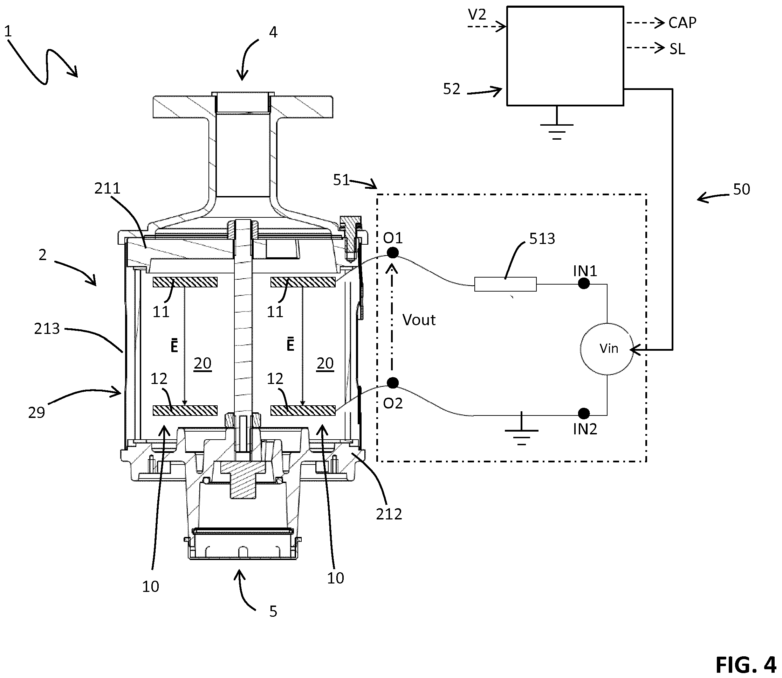

Figure 2 shows an embodiment of the invention, in which the demoisturizer unit 2 comprises a single tank 20, while Figure 4 shows an embodiment of the invention, in which the demoisturizer unit 2 comprises two tanks 20.

Further embodiments of the invention are possible, in which the demoisturizer unit 2 comprises three or more tanks 20.

Each tank 20 generally comprises a plurality of walls defining an internal volume and forming, at least partially, the walls of the enclosure 29.

Preferably, referring to a normal operative positioning of the breather device 1 (as shown in figure 1), each tank 20 comprises a first upper wall 211 and a second lower wall 212 opposite one to another and a third lateral wall 213 arranged between the first and second walls 211, 212.

In general, the first upper wall 211 and the second lower wall 212 are arranged in proximal position with respect to the outlet portion 4 and the inlet portion 5 of the breather device 1, respectively.

Preferably, when the demoisturizer unit 2 comprises multiple tanks 20 arranged side by side, these latter may include a common portion of lateral wall, as it is evident from figure 4. Preferably, each tank 20 comprises at least a first opening (not shown) in fluid-dynamic communication with the inlet portion 5 to allow air coming from the external atmosphere to flow into the internal volume of said tank.

Preferably, each first opening is arranged at the second lower wall 212 of the corresponding tank 20.

Each tank 20 comprises at least a second opening (not shown) in fluid-dynamic communication with the outlet portion 4 to allow dehumidified air to flow out from the internal volume of said tank, during the normal operation of the breather device 1 (i.e. when this latter carries out its air dehumidifying functionalities).

Preferably, each second opening is arranged at the first upper wall 211 of each tank 20, thereby in distal position from the above-mentioned one or more first openings.

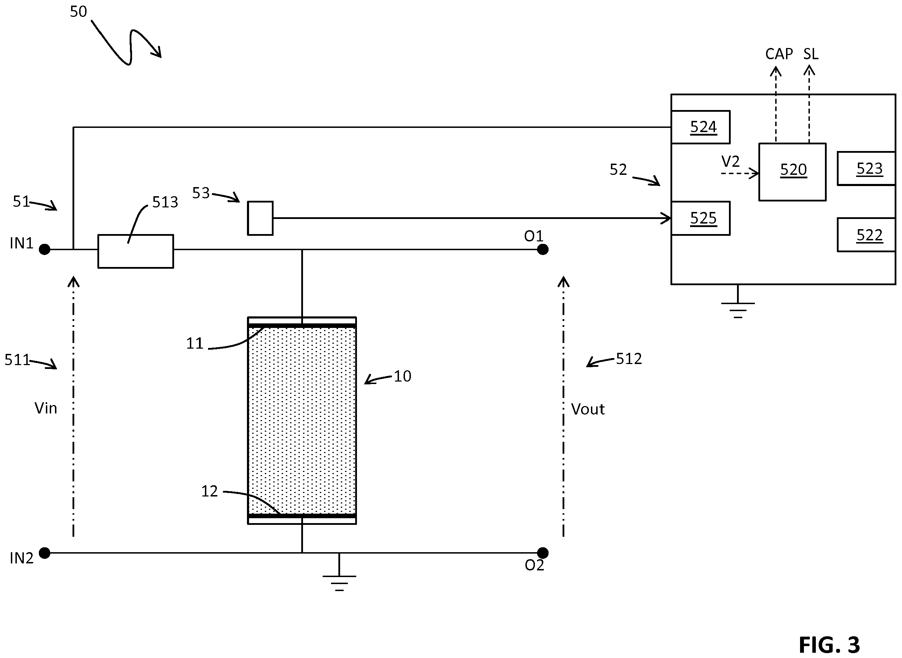

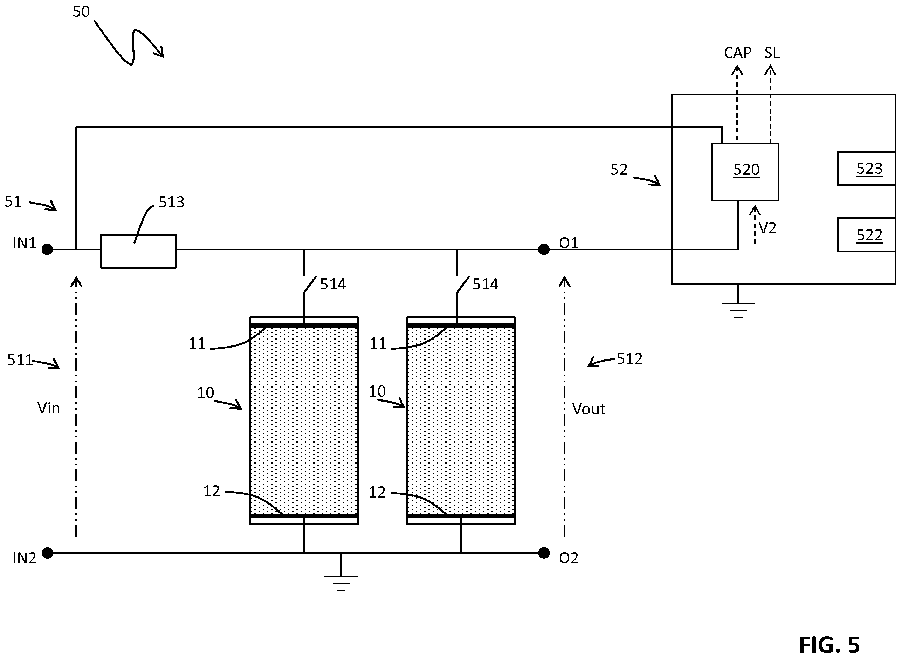

Conveniently, in the internal volume of each tank 20, the demoisturizer unit 2 comprises a moisture absorbing substance (shown as a dotted region in figures 3 and 5), which may be of known type, such as air-drying salts, e.g. silica gel.

The moisture absorbing substance is accommodated between the opposite walls 211, 212 of each tank 20. In this way, air coming from the external environment and passing through the above-mentioned first openings of the one or more tanks 20 is forced to pass through said moisture absorbing substance before flowing out of said tanks through the above-mentioned second openings.

Conveniently, the outlet portion 4 of the breather device 1 comprises a valve assembly (not shown) in fluid-dynamic communication with each tank 20 and the outlet port 40.

Said valve assembly is adapted to allow or prevent a flow of air coming from each tank 20 to reach the main port 4 and flow towards the expansion vessel of the power electrical apparatus. According to some embodiments of the invention, in the internal volume of each tank 20, the demoisturizer unit 2 comprises a heater (not shown) for regenerating said moisture absorbing substance, when it reaches a saturation condition.

According to other embodiments of the invention, however, the breather device 1 may not be provided with means for regenerating the moisture absorbing substance. In this case, the moisture absorbing substance of each tank 20 has to be simply replaced when it reaches a saturation condition.

In general, most of the components of the breather device 1 (e.g. the inlet and outlet portions 5 and 4, the tanks 20, the above-mentioned valve assembly and heaters, and so on) may be industrially realized according to solutions of known type and they will not be described in further details for the sake of brevity.

In principle, these components of the breather device 1 may be industrially realized according to solutions of different type with respect to the one described above.

An important aspect of the invention consists in that each tank 20 accommodates a corresponding capacitive electric arrangement 10 in its internal volume.

Each capacitive electric arrangement 10 comprises a first electrode 11 and a second electrode 12 arranged in the internal volume of the corresponding tank 20 in such a way to be spaced one from another.

The first and second electrodes 11, 12 are arranged in such a way to be in contact or in proximity of the moisture absorbing material in the corresponding tank 20 at different sides of this latter. In this way, the space between the first and second electrodes is at least partially filed by said moisture absorbing material.

Each capacitive electric arrangement 10 of a tank 20 is thus formed by the first and second electrodes 11, 12 and by a quantity of said moisture absorbing material between said electrodes. This latter conveniently forms (at least partially) the dielectric medium between the electrodes of the capacitive electric arrangement. In this way, an electric field $\bar{E}$ generated between the spaced electrodes 11, 12 passes through the moisture absorbing material contained in the tank 20 (figures 2 and 4).

Preferably, the electrodes 11, 12 of a capacitive electric arrangement 10 are arranged at or in proximity of the opposite walls 211, 212 of the corresponding tank 20.

Preferably, the electrodes 11, 12 are at least partially made of a conductive material. As an example, each electrode 11, 12 may be formed by a corresponding plate or foil of conductive material, e.g. copper.

Preferably, the electrodes 11, 12 are at least partially covered with electrically insulating material to reduce the occurrence of leakage currents when a voltage is applied to said electrodes.

In principle, the shape of the electrodes 11, 12 may be any, according to the needs. Conveniently, the shape of the electrodes 11, 12 is designed depending on the shape of the tank 20 in which they are accommodated. As an example, if a tank 20 has a cylindrical geometry, the electrodes 11, 12 may be conveniently designed with a circular shape. According to another important aspect of the invention, the breather device 1 comprises or it is operatively coupleable with a detection device 50.

In general, the detection device 50 is electrically connectable with each capacitive electric arrangement 10 accommodated in a tank 20.

When the breather device 1 comprises multiple tanks 20 and multiple capacitive electric arrangements 20, the detection device 50 is electrically connectable in a selective manner with each capacitive electric arrangement 10.

However, when the breather device 1 comprises a single tank 20 and a single capacitive unit 10 accommodated in said tank, the detection device 50 can be electrically connected in a permanent manner with said capacitive electric arrangement.

According to the invention, the detection device 50 is adapted to provide first measurement data CAP indicative of the equivalent capacitance of a capacitive electric arrangement 10 accommodated in a tank 20.

Since the extension and the relative distance value of the electrodes 11, 12 of each capacitive electric arrangement 10 are given and known by construction, the equivalent capacitance value C of a capacitive electric arrangement 10 varies with the dielectric constant of the dielectric medium between the electrodes 11, 12 (in accordance with the notorious properties of capacitors), i.e. with the dielectric constant of the moisture absorbing substance.

It has been observed that the dielectric constant of the moisture absorbing substance contained in a tank 20 depends on the saturation condition of such a material according to a variation law that can be empirically established through suitable test sessions that can be carried out by adopting simple testing procedures of known type.

The above-mentioned first measurement data CAP indicative of the equivalent capacitance of a capacitive electric arrangement 10 can thus be processed to obtain information indicative of the level of saturation of the moisture absorbing substance contained in the tank 20, in which said capacitive electric arrangement is arranged.

The detection device 50 can thus provide an indirect measurement of the level of saturation of the moisture absorbing substance contained in each tank 20 of the demoisturizer unit 2 by electrically connecting with the electrodes 11, 12 accommodated in said tank and by suitably measuring the equivalent capacitance value C of the capacitive electric arrangement 10 formed by said electrodes and by said moisture absorbing substance.

According to some embodiments of the invention, the detection device 50 is not included in the breather device 1 (which may for example arranged in a remote position).

According to preferred embodiments of the invention, however, the detection device 50 is included and arranged on-board the breather device 1. In this case, the breather device 1 is *per se* capable of automatically providing information indicative of a possible saturation condition of the moisture absorbing substance contained in the tanks 20.

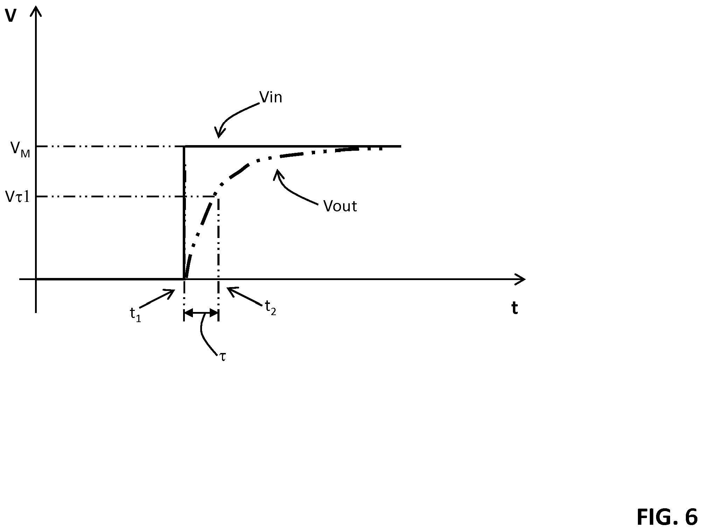

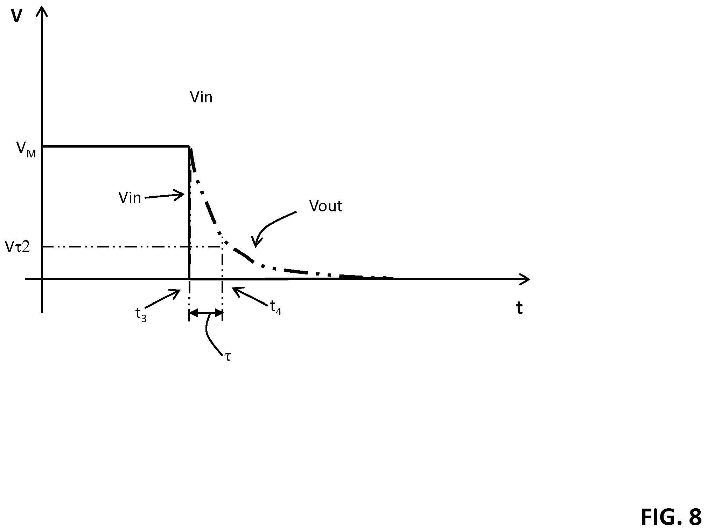

Preferably, the detection device 50 comprises a detection circuit 51 electrically connectable in a selective manner with each capacitive electric arrangement 10 accommodated in a tank 20. Preferably, the detection circuit 51 comprises an input port 511 including first and second input terminals IN1, IN2 adapted to receive an input voltage Vin from a voltage source. Preferably, the input voltage Vin is predefined. As an example, the input voltage Vin may be a voltage having a predefined amplitude value $V_M$ (figures 6 and 8).

Preferably, the detection circuit 51 comprises an output port 512 including first and second output terminals O1, 02 electrically connectable with the electrodes 11, 12 of each capacitive electric arrangement 10 of the breather device.

When the breather device 1 comprises multiple tanks 20 and multiple capacitive electric arrangements 10, the output port 512 of the detection circuit 51 is electrically connectable in a selective manner with each capacitive electric arrangement 10.

To this aim, for each capacitive electric arrangement 10, the measuring circuit 51 may comprise a suitable switch 514 electrically connecting an output terminal O1 of the output port 512 and an electrode 11 of said capacitive electric arrangement (conveniently, the other output terminal 02 of the output port 512 may be electrically connected in a permanent manner with the other electrodes 12 of said capacitive electric arrangement).

However, when the breather device 1 comprises a single tank 20 and a single capacitive unit 10 accommodated in said tank, the output terminals O1, 02 of the output ort 51 can be electrically connected in a permanent manner with the corresponding electrodes 11, 12 of said capacitive electric arrangement.

Preferably, the detection circuit 51 comprises a resistive circuit 513 electrically connected with the input port 511 and the output port 512 and electrically connectable with the electrodes 11, 12 of each capacitive electric arrangement 10 of the breather device.

When the breather device 1 comprises multiple tanks 20 and multiple capacitive electric arrangements 10, the resistive circuit 513 of the detection circuit 51 is electrically connectable in a selective manner with each capacitive electric arrangement 10 (thanks to the above-described switches 514).

However, when the breather device 1 comprises a single tank 20 and a single capacitive unit 10 accommodated in said tank, the resistive circuit 513 can be electrically connected in a permanent manner with the corresponding electrodes 11, 12 of said capacitive electric arrangement.

According to some embodiments of the invention, the resistive circuit 513 comprises one or more resistors electrically connected in series with at least a terminal of the input port 511 (e.g. with the input terminal IN1) and with at least a terminal of the output port 512 (e.g. with the output terminal O1) and electrically connectable with the electrodes 11, 12 of each capacitive electric arrangement 10 (e.g. the first electrode 11).

According to other embodiments of the invention, the resistive circuit 513 may include more complicated circuit arrangements instead of said resistors, for example a so-called De Sauty bridge.

The output port 512 of the detection circuit 51 is adapted to provide an output voltage Vout in response to the reception of the input voltage Vin at the input terminals IN1, IN2 of the input port 511. Obviously, as it will be better apparent from the following, the behavior of the output voltage Vout depends on the equivalent resistance value R of the detection circuit 51 and on the equivalent capacitance value C of the capacitive electric arrangement 10 with which the detection circuit 51 is electrically connected.

Preferably, the detection device 50 comprises a control unit 52 adapted to control the operation of the detection circuit 51 and provide data processing functionalities.

Preferably, the control unit 52 comprises digital data processing means 520 (e.g. one or more microprocessors configured) configured executed software instructions stored in a memory. In order to carry out its functionalities, the control unit 50 may also additional circuit of digital or analog type.

Preferably, the control unit 52 comprises one or more wired ports 522 (e.g. RS-232 ports, RS-485 ports, Profibus ports, Ethernet ports, or other communication ports of known type) and/or one or more wireless ports 523 (e.g. WiFi ports, Bluetooth ports, NFC ports, 2G to 5G communication ports, or other communication ports of known type) to communicate with external device at local and/or or remote level.

Preferably, the control unit 52 is adapted to provide the above-mentioned input voltage Vin at the input port 511 of the detection circuit 51.

According to some embodiments of the invention (figure 3), the control unit 52 comprises a voltage generation module 524 controlled by the data processing means 520 and adapted to generate the input voltage Vin.

This solution is more convenient when the input voltage Vin has an amplitude (e.g. 5V or 12V) higher than the voltage level normally adopted in digital circuits.

According to other embodiments of the invention (figure 5), the data processing means 520 are adapted to directly generate the input voltage Vin, e.g. at a suitable power pin (not shown). This solution is convenient when the input voltage Vin has an amplitude (e.g. 3.3V) comparable with the voltage level normally adopted in digital circuits.

In the practical implementation of the invention, the voltage generation module 524 or the above-mentioned power pin of the data processing means 510 may be electrically connected with an input terminal IN1 of the input port 511 (the other input terminal IN2 of the input port may be conveniently referred to ground).

Preferably, the control unit 52 is adapted to acquire detection data V2 indicative of the output voltage Vout at the output port 512 of the detection circuit 51.

According to some embodiments of the invention (figure 3), the detection device 50 comprises a sensor element 53 adapted to detect the output voltage Vout and provide detection signals S indicative of said output voltage.

Conveniently, the control unit 52 comprises an interface module 525 adapted to receive the sensing signals S and provide the detection data V2 to the data processing means 520. This solution is more convenient when the output voltage Vout may reach an amplitude higher than the voltage level normally adopted in digital circuits.

According to some embodiments of the invention (figure 5), the data processing means 520 are adapted to directly receive the output voltage Vout, e.g. at a suitable power pin (not shown). In this way, the data processing means can directly process the output voltage signal Vout to acquire the detection data V2. This solution is convenient when the output voltage Vout has an amplitude comparable with the voltage level normally adopted in digital circuits. Preferably, the data processing means 520 of the processing unit 52 are configured to calculate the first measurement data CAP (which are indicative of the equivalent capacitance of a capacitive electric arrangement 10 with which the detection circuit 51 is electrically connected) basing on the acquired detection data V2 indicative of the output voltage Vout at the output port 512 of the detection circuit 51.

Conveniently, the data processing means 520 are configured to carry out one or more measuring procedures 5200, 5300 to calculate the first measurement data CAP.

An important aspect of said measuring procedures consist in that they include the calculation of a time constant $\tau$ characteristic of the RC circuit assembly including the detection circuit 51 and a capacitive electric arrangement 10 electrically connected with said detection circuit.

This solution finds its ground in the observation that the circuit assembly formed by the detection circuit 51 (which is of resistive type) and by a capacitive electric arrangement 10 (electrically connected therewith) forms an electric circuit assembly of RC-series type.

The time constant $\tau$ characteristic of such a electric circuit assembly is given by the following relation:

$$\tau = R^*C$$

where R is the equivalent resistance value of the detection circuit 51 and C is the equivalent capacitance value of the capacitive electric arrangement 10 (parasitic resistances and capacitances are here not considered for apparent simplicity purposes).

Since the equivalent resistance value of the detection circuit 51 is known by construction, it is evident that it is possible to measure the equivalent capacitance value of the capacitive electric arrangement 10 by measuring the characteristic time constant $\tau$.

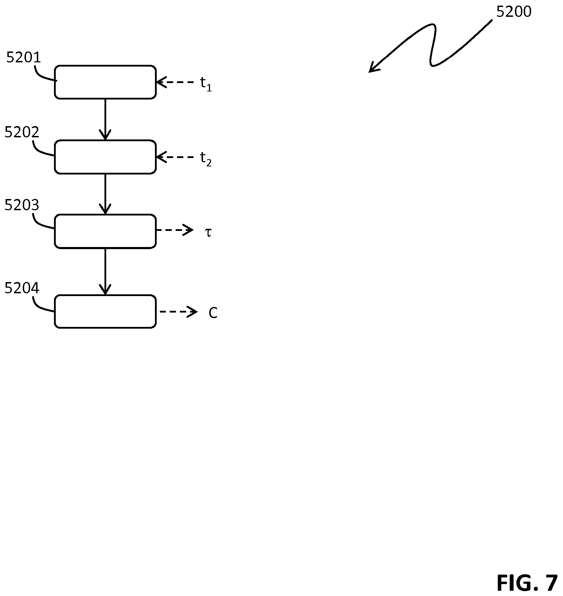

A measuring procedure 5200 preferably carried out by the data processing means 520 is now described with reference to figures 6 and 7.

Such a measuring procedure is based on the observation of the output voltage Vout at the output port 512 of the detection circuit 51 starting from the instant in which the input voltage Vin is provided to the input port 511 of the detection circuit 51.

The measuring procedure 5200 comprises a step 5201 of acquiring a first instant $t_1$, at which an input voltage Vin having a predefined voltage value $V_M$ is received at the input port 511 of the detection circuit 51.

In response to receiving the input voltage Vin at the input port 511, the detection circuit 51 (which is electrically connected to the capacitive electric arrangement 10 of a tank 20) provides an output voltage Vout at the output port 512.

Since the circuit assembly formed by the detection circuit 51 (which is of resistive type) and a capacitive electric arrangement 10 electrically connected therewith is an electric circuit of RC-series type, starting from the first instant $t_1$, the output voltage Vout progressively increases according to a characteristic exponential law until reaching the predefined voltage value $V_M$ in steady-state conditions.

The measuring procedure 5200 comprises a step 5202 of acquiring a second instant $t_2$, at which the output voltage Vout at the output port 512 of the detection circuit 51 reaches a first voltage threshold value $V\tau1$.

The first voltage threshold value $V\tau1$ is calculated basing on the predefined voltage value $V_M$ of the input voltage Vin according to the following relation: $V\tau1 = 0.63^*V_M$.

Thus, preferably, the second instant $t_2$ is the instant at which the output voltage Vout reaches the first voltage threshold value $V\tau1 \approx 0.63$ Vin.

Also this solution finds its ground in the observation that the circuit assembly formed by the detection circuit 51 (which is of resistive type) and a capacitive electric arrangement 10 electrically connected therewith is an electric circuit of RC-series type.

This means that, when an input voltage Vin is applied to the input port 511 at an initial instant (t=0 for simplicity), the output voltage Vout increases with time according to the following relation (figure 6):

$$Vout = Vin \left(1 - e^{-\frac{t}{RC}}\right) = Vin \left(1 - e^{-\frac{t}{\tau}}\right)$$

where e is the Neperian constant, $\tau=R^*C$ is the characteristic time constant of the above-mentioned electric circuit of RC-series type, R is the equivalent resistance value of the detection circuit 51 and C is the equivalent capacitance value of the capacitive electric arrangement 10 (parasitic resistances and capacitances are not considered for the sake of simplicity).

When a time $\tau = R^*C$ has passed from the initial instant, the following relation is given:

$$Vout = Vin \left(1 - \frac{1}{e}\right) \approx Vin * 0.63$$

Therefore, the step 5202 of acquiring a second instant $t_2$, at which the output voltage Vout at the output port 512 of the detection circuit 51 reaches the first voltage threshold value $V\tau1$ allows measuring (in time) the characteristic time constant $\tau=R^*C$ of the above-mentioned circuit assembly (of RC-series type) formed by the detection circuit 51 and the capacitive electric arrangement 10 electrically connected therewith.

The measuring procedure 5200 thus comprises a step 5203 of calculating a time value $\tau$ indicative of the time difference between the first and second instants $t_1$ and $t_2$.

In view of the above, the time value $\tau$ is apparently given by the following relation:

$$\tau = t_2 - t_1 = R^*C$$

where R is the equivalent resistance value of the detection circuit 51 and C is the equivalent capacitance value of the capacitive electric arrangement 10.

As illustrated above, the calculation of the time value $\tau$ allows calculating the equivalent capacitance value C of the capacitive electric arrangement 10, as the equivalent resistance value R of the detection circuit 51 is known by construction.

The measuring procedure 5200 thus comprises a step 5204 of calculating a measurement value C indicative of the equivalent capacitance of a capacitive electric arrangement 10 electrically connected with the detection circuit 51, basing on the time value $\tau$.

In view of the above, the measurement value C is apparently given by the following relation:

$$C = \frac{\tau}{R}$$

where R is the equivalent resistance value of the detection circuit 51 and $\tau$ is the measured time value measured basing on the acquired instants $t_1$ and $t_2$, as illustrated above.

The measuring procedure 5200 allows calculating in a simple, quick and effective manner first measurement data CAP indicative of the equivalent capacitance of a capacitive electric arrangement 10 electrically connected with the detection circuit 51, when an input voltage Vin is applied to the input port 511 of this latter.

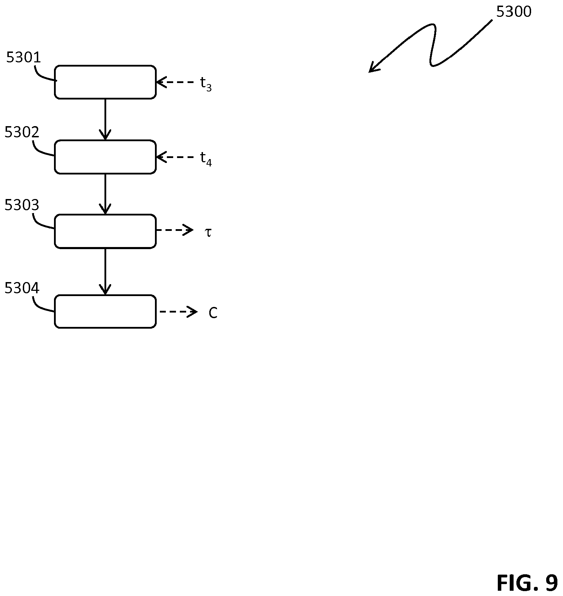

A further measuring procedure 5300 that may be carry out by the data processing means 520 is now described with reference to figures 8 and 9.

Such a measuring procedure is based on the observation of the output voltage Vout at the output port 512 of the detection circuit 51 starting from the instant in which the input voltage Vin is no more provided at the input port 511 of the detection circuit 51, in practice starting from the instant in which the input voltage Vin (that has been provided for a suitable time interval at the input port 511 of the detection circuit 51) is switched off (i.e. brought to 0 V). The measuring procedure 5300 comprises a step 5301 of acquiring a third instant $t_3$, at which an input voltage Vin having a predefined voltage value $V_M$ is no more received at the input port 511 of the detection circuit 51.

In response to interrupting the input voltage Vin at the input port 511, the detection circuit 51 (which is electrically connected to the capacitive electric arrangement 10 of a tank 20) provides an output voltage Vout at the output port 512, which progressively decreases according to a characteristic exponential law until reaching a null value in steady-state conditions.

The measuring procedure 5300 comprises a step 5302 of acquiring a fourth instant $t_4$, at which the output voltage Vout at the output port 512 of the detection circuit 51 reaches a second voltage threshold value $V\tau2$.

The second voltage threshold value $V\tau2$ is calculated basing on the predefined voltage value $V_M$ of the input voltage Vin according to the following relation: $V\tau1 = 0.37^*V_M$.

Thus, preferably, the fourth instant $t_4$ is the instant at which the output voltage Vout reaches the first voltage threshold value $V\tau2 \approx 0{,}37$ Vin.

Also this solution finds its ground in the observation that the circuit assembly formed by the detection circuit 51 (which is of resistive type) and a capacitive electric arrangement 10 electrically connected therewith is an electric circuit of RC-series type.

This means that, when an input voltage Vin is interrupted to the input port 511 at a given initial instant (t=0 for simplicity), the output voltage Vout increases with time according to the following relation (figure 8):

$$Vout = Vin \left( e^{-\frac{t}{RC}} \right) = Vin \left( e^{-\frac{t}{\tau}} \right)$$

where e is the Neperian constant, $\tau$=R*C is the characteristic time constant of the above-mentioned electric circuit of RC-series type, R is the equivalent resistance value of the detection circuit 51 and C is the equivalent capacitance value of the capacitive electric arrangement 10 (parasitic resistances and capacitances are not considered for the sake of simplicity).

When a time $\tau$ = R*C is passed from the initial instant, the following relation is given:

$$Vout = Vin \left(\frac{1}{e}\right) \approx Vin * 0.37$$

Therefore, the step 5302 of acquiring a fourth instant $t_4$, at which the output voltage Vout at the output port 512 of the detection circuit 51 reaches the second voltage threshold value V$\tau$2 allows measuring (in time) the characteristic time constant $\tau$=R*C of the above-mentioned circuit assembly (of RC-series type) formed by the detection circuit 51 and the capacitive electric arrangement 10 electrically connected therewith.

The measuring procedure 5200 thus comprises a step 5303 of calculating a time value $\tau$ indicative of the time difference between the third and fourth instants $t_3$ and $t_4$.

In view of the above, the time value $\tau$ is apparently given by the following relation:

$$\tau = t_4 - t_3 = R*C$$

where R is the equivalent resistance value of the detection circuit 51 and C is the equivalent capacitance value of the capacitive electric arrangement 10.

As illustrated above, the calculation of the time value $\tau$ allows calculating the equivalent capacitance value C of the capacitive electric arrangement 10, as the equivalent resistance value R of the detection circuit 51 is known by construction.

The measuring procedure 5200 thus comprises a step 5204 of calculating a measurement value C indicative of the equivalent capacitance of a capacitive electric arrangement 10 electrically connected with the detection circuit 51, basing on the time value $\tau$.

The measurement value C can be conveniently calculated as illustrated above.

Also the measuring procedure 5300 allows calculating in a simple and effective manner first measurement data CAP indicative of the equivalent capacitance of a capacitive electric arrangement 10 electrically connected with the detection circuit 51, when an input voltage Vin is applied to the input port 511 of this latter. However, such a procedure requires that the detection circuit 51 is initially power up (by applying the input voltage Vin at the input port 511) at steady state conditions. Thus, it requires a longer measurement time.

According to other embodiments of the invention (not shown), the data processing means 520 might carry out yet further measuring procedures (not shown), which combine the above-illustrated measuring procedures 5200 and 5300.

Such measuring procedures are based on the observation of the output voltage Vout at the output port 512 of the detection circuit 51 at different instants, i.e. starting from an initial instant, in which the input voltage Vin is provided at the input port 511 of the detection circuit 51, and starting from a following instant, in which the input voltage Vin is no more provided at the input port 511 of the detection circuit 51.

Said further measuring procedures allow calculating multiple measurement values C indicative of the equivalent capacitance of a capacitive electric arrangement 10, which can be further processed (e.g. by calculating an average value) to improve the measurement accuracy of the equivalent capacitance value of the capacitive electric arrangement 10. Also the above-illustrated measuring procedures require a longer measurement time.

As illustrated above, the first measurements data CAP may be conveniently processed as the equivalent capacitance of a capacitive electric arrangement 10 depends on the dielectric constant of the moisture absorbing substance between the electrodes 11 and 12, which in turn depends on the saturation level of said moisture absorbing substance.

According to some embodiments of the invention, the data processing means 520 of the control unit 52 are configured to calculate second measurement data SL indicative of the level of saturation of the moisture absorbing substance contained in a tank 20 basing on the first measurement data CAP indicative of the equivalent capacitance of a capacitive electric arrangement 10 accommodated in said tank.

As mentioned above, the dielectric constant of the moisture absorbing substance contained in a tank 20 depends on the saturation condition of such a material according to a variation law that can be empirically established through suitable test sessions of known type.

The data processing means 520 may thus calculate the second measurement data SL by processing the first measurement data CAP through suitable look-up tables, which can be predefined.

Conveniently, such look-up tables can be set in such a way to suitably link measured equivalent capacitance values C with corresponding values indicative of the saturation condition of the moisture absorbing substance contained in the tanks 20 of the breather device 1.

Preferably, the data processing means 520 are configured to provide an alarm signal (not shown), when the calculated measured saturation level of the moisture absorbing substance exceeds a predefined saturation threshold value. Conveniently, the control unit 2 may transmit the above mentioned alarm signal to an external device (not shown), for example a signalling relay.

According to other embodiments of the invention, the control unit 2 may transmit the first measurements data CAP to an external computerised device (not shown), for example to a remote computerised platform. Conveniently, this latter can calculate the above-mentioned second measurement data SL in the way described above.

The breather device 1, according to the invention, provides relevant advantages with respect to corresponding detection devices of the state of the art.

The breather device 1 comprises a capacitive electric arrangement 10 embedded in each tank 20. Said capacitive electric arrangements conveniently employ the moisture absorbing substance accommodated in each tank as a dielectric medium. This solution is quite advantageous as it allows directly measuring the dielectric properties of the moisture absorbing substance of each tank 20 without integrating dedicated self-standing sensors (e.g. capacitive sensors) in the internal volume of said tank.

Thanks to embedding a capacitive sensing arrangement 10 in each tank 20, the breather device 1 allows an easy detection of a possible saturation condition of the moisture absorbing substance accommodated in the tanks 20 through a simple detection circuit 51. The detection of the saturation condition of the moisture absorbing unit in a tank 20 is carried out by measuring the equivalent capacitance value C of the capacitive electric arrangement embedded in said tank.

The measurement of the equivalent capacitance value C is in turn carried out by measuring the characteristic time constant of the RC-series circuit assembly formed by the detection circuit 51 and the capacitive electric arrangement 10 (when electrically connected one to another) through simple voltage measurements of the output voltage Vout at the output port 512 of the detection circuit 51.

Since the detection circuit 51 has a very simple structure and the capacitive electric arrangements 10 are embedded in the tanks 20, the breather device 1 has a simple and compact structure.

The breather device 1 can thus be easily installed on the field, even for retrofitting purposes. The breather device 1 can be easily manufactured at industrial level with production costs quite competitive with respect to traditional devices of the same type.

## Claims

1. A breather device (1) for dehumidifying air to be supplied into an expansion vessel (103) of a power electrical apparatus (100), said breather device comprising an air demoisturizer unit (2) including one or more tanks (2) having an internal volume (20) accommodating a moisture absorbing substance and adapted to be in fluid-dynamic communication with the external environment and with said expansion vessel, **characterised in that** it comprises one or more capacitive electric arrangements (10) accommodated in said one or more tanks (2), each capacitive electric arrangement comprising first and second electrodes (11, 12) arranged spaced one from another in the internal volume (20) of a corresponding tank (2) and a quantity of said moisture absorbing substance between said first and second electrodes, said breather device further comprising or being operatively coupleable with a detection device (50) electrically connectable with the capacitive electric arrangement (10) of each tank (2) and adapted to provide first measurement data (CAP) indicative of the equivalent capacitance of said capacitive electric arrangement.

2. A breather device, according to claim 1, **characterised in that** said detection device (50) comprises a detection circuit (51) comprising:

   - an input port (511) adapted to receive an input voltage (Vin) from a voltage source; and
   - an output port (512) electrically connectable with the electrodes (11, 12) of the capacitive electric arrangement (10) of a tank (2) and adapted to provide an output voltage (Vout) in response to receiving said input voltage (Vin) at said input terminals; and
   - a resistive circuit (513) electrically connected with said input port and said output port (512).

3. A breather device, according to claim 2, **characterised in that** said detection device (50) comprises a control unit (52) adapted to provide the input voltage (Vin) at the input port (511) of said detection circuit (51) and adapted to acquire detection data (V2) indicative of the output voltage (Vout) at the output port (512) of said detection circuit (51), said control unit comprising data processing means (520) configured to calculate said first measurement data (CAP) basing on said detection data (V2).

4. A breather device, according to claim 3, **characterised in that** said data processing means (520) are configured to carry out one or more measuring procedures (5200, 5300) to calculate said first measurement data (CAP), said measuring procedure including the calculation of a time constant ($\tau$) characteristic of a RC circuit assembly including said detection circuit (51) and the capacitive electric arrangement (10) electrically connected with said detection circuit.

5. A breather device, according to claim 4, **characterised in that** said data processing means (520) are configured to carry out a measuring procedure (5200) including the following steps:

   - acquiring (5201) a first instant ($t_1$), at which the input voltage (Vin) having a predefined voltage value ($V_M$) is received at the input port (511) of said detection circuit;
   - acquiring (5202) a second instant ($t_2$), at which the output voltage (Vout) at the output port (512) of said detection circuit (51) reaches a first voltage threshold value ($V\tau1$), said first voltage threshold value being calculated basing on the predefined voltage value ($V_M$) of said input voltage (Vin), according to the following relation $V\tau1 = 0.63^*V_M$, where $V\tau1$ is said first voltage threshold value and $V_M$ is the predefined value of said input voltage (Vin);
   - calculating (5203) a time value ($\tau$) indicative of the time difference between said first and second instants ($t_1, t_2$);
   - basing on said time value ($\tau$), calculating (5204) a measurement value (C) indicative of the equivalent capacitance of the capacitive electric arrangement (10) electrically connected with said detection circuit (51).

6. A breather device, according to claim 4 or 5, **characterised in that** said data processing means (520) are configured to carry out a measuring procedure (5300) including the following steps:

   - acquiring (5301) a third instant ($t_3$), , at which the input voltage (Vin) having a predefined voltage value ($V_M$) is no more received at the input port (511) of said detection circuit;
   - acquiring (5302) a fourth instant ($t_4$), at which the output voltage (Vout) at the output port (512) of said detection circuit (51) reaches a second voltage threshold value ($V\tau2$), said second voltage threshold value being calculated basing on the predefined voltage value ($V_M$) of said input voltage (Vin), according to the following relation $V\tau2 = 0.37^*V_M$, where $V\tau2$ is said second voltage threshold value and $V_M$ is the predefined value of said input voltage (Vin);
   - calculating (5303) a time value ($\tau$) indicative of the time difference between said third and fourth instants ($t_3, t_4$);
   - basing on said time value ($\tau$), calculating (5304) a measurement value (C) indicative of the equivalent capacitance of the capacitive electric arrangement (10) electrically connected with said detection circuit (51).

7. A breather device, according to one or more of the claims from 3 to 6, **characterised in that** said data processing means (520) are configured to calculate second measurement data (SL) indicative of the level of saturation of the moisture absorbing substance contained in a tank (20) of said breather device basing on said first measurement data (C).

8. A breather device, according to one or more of the claims from 3 to 7, **characterised in that** said detection device (50) comprises a sensor element (53) adapted to detect the output voltage (Vout) provided by said detection circuit (51) at said output port (512) and provide detection signals (S) indicative of said output voltage to said control unit (52).

9. A breather device, according to one or more of the claims from 3 to 7, **characterised in that** said control unit (52) is adapted to directly receive the output voltage (Vout) provided by said detection circuit (51) at said output port (512).

10. A breather device, according to one or more of the claims from 3 to 9, **characterised in that** said control unit (52) comprises a voltage generation module (525) controlled by said data processing means (520) and adapted to generate the input voltage (Vin) received by said detection circuit (51) at said input port (511).

11. A breather device, according to one or more of the claims from 3 to 9, **characterised in that** said data processing means (520) are adapted to directly generate the input voltage (Vin) received by said detection circuit (51) at said input port (511).

12. A breather device, according to one or more of the previous claims, **characterised in that** it comprises said detection device (50) arranged on-board.

13. A power electrical apparatus (100) for electric power transmission and distribution installations **characterised in that** it comprises at least a breather device (1), according to one or more of the previous claims.

14. A power electrical apparatus, according to claim 13, **characterised in that** it is a power transformer.


**Patentansprüche**

1. Belüftungsvorrichtung (1) zum Entfeuchten von Luft, die einem Expansionsgefäß (103) eines elektrischen Geräts (100) zugeführt werden soll, wobei die Belüftungsvorrichtung eine Luftentfeuchtereinheit (2) umfasst, die einen oder mehrere Tanks (2) mit einem inneren Volumen (20) umfasst, das eine feuchtigkeitsabsorbierende Substanz aufnimmt und geeignet ist, in flüssigkeitsdynamischer Verbindung mit der äußeren Umgebung und mit dem Ausdehnungsgefäß zu stehen, **dadurch gekennzeichnet, dass** es eine oder mehrere kapazitive elektrische Anordnungen (10) umfasst, die in dem einen oder mehreren Tanks (2) untergebracht sind, wobei jede kapazitive elektrische Anordnung eine erste und eine zweite Elektrode (11, 12) umfasst, die mit einem Abstand zueinander im Innenvolumen (20) eines entsprechenden Tanks (2) angeordnet sind, und eine Menge der besagten feuchtigkeitsabsorbierenden Substanz zwischen der ersten und der zweiten Elektrode, wobei die Entlüftungsvorrichtung ferner eine Erfassungsvorrichtung (50) umfasst oder im Betrieb mit dieser koppelbar ist, elektrisch mit der kapazitiven elektrischen Anordnung (10) jedes Tanks (2) zu verbinden und angepasst, um erste Messdaten (CAP) bereitzustellen, welche die äquivalente Kapazität der kapazitiven elektrischen Anordnung anzeigen.

2. Belüftungsvorrichtung entsprechend Anspruch 1, **dadurch gekennzeichnet, dass** die besagte Erfassungsvorrichtung (50) eine Erfassungsschaltung (51) umfasst, umfassend:

    - einen Eingangsanschluss (511), angepasst, um eine Eingangsspannung (Vin) von einer Spannungsquelle zu empfangen; und
    - einen Ausgangsanschluss (512), elektrisch zu verbinden mit den Elektroden (11, 12) der kapazitiven elektrischen Anordnung (10) eines Tanks (2) und angepasst, um eine Ausgabespannung (Vout) als Reaktion auf den Empfang der besagten Eingangsspannung (Vin) an den besagten Eingangsterminals bereitzustellen; und
    - eine Widerstandsschaltung (513), elektrisch mit dem besagten Eingangsanschluss und dem besagten Ausgangsanschluss verbunden (512).

3. Belüftungsvorrichtung nach Anspruch 2, **dadurch gekennzeichnet, dass** die Erfassungsvorrichtung (50) eine Steuereinheit (52) umfasst, angepasst, um die Eingangsspannung (Vin) an dem Eingangsanschluss (511) der Erfassungsschaltung (51) bereitzustellen, und angepasst, Erfassungsdaten (V2) zu erfassen, welche die Ausgangsspannung (Vout) an dem Ausgangsanschluss (512) der Erfassungsschaltung (51) anzeigen, wobei die Steuereinheit Datenverarbeitungsmittel (520) umfasst, konfiguriert, um die ersten Messdaten (CAP) aufgrund der Erfassungsdaten (V2) zu berechnen.

4. Belüftungsvorrichtung nach Anspruch 3, **dadurch gekennzeichnet, dass** die besagten Datenverarbeitungsmittel (520) konfiguriert sind, einen oder mehrere Messvorgänge (5200, 5300) durchzuführen, um die besagten ersten Messdaten (CAP) zu berechnen. Der besagte Messvorgang enthält die Berechnung einer Zeitkonstanten ($_T$), wie sie für eine RC-Kreisanordnung typisch ist, einschließlich der besagten Erfassungsschaltung (51) und der kapazitiven elektrischen Anordnung (10), die mit der besagten Erfassungsschaltung elektrisch verbunden ist.

5. Belüftungsvorrichtung nach Anspruch 4, **dadurch gekennzeichnet, dass** das besagte Datenverarbeitungsmittel (520) konfiguriert ist, ein Messverfahren (5200) durchzuführen, einschließlich der folgenden Schritte:

    - Erhalten (5201) eines ersten Zeitpunkts ($t_1$), bei welchem die Eingangsspannung (Vin) einen vordefinierten Spannungswert ($V_M$) aufweist und am Eingangsanschluss (511) der besagten Erfassungsschaltung empfangen wird;
    - Erfassen (5202) eines zweiten Zeitpunkts ($t_2$), zu dem die Ausgangsspannung (Vout) am Ausgangsanschluss (512) der besagten Erfassungsschaltung (51) einen ersten Spannungsschwellwert ($V_T1$) erreicht, wobei der erste Spannungsschwellwert basierend auf dem vordefinierten Spannungswert ($V_M$) der Eingangsspannung (Vin) berechnet wird, gemäß der folgenden Beziehung $V_T1 = 0.63*V_M$, wobei $V_T1$ der erste Spannungsschwellwert und $V_M$ der vordefinierte Wert der Eingangsspannung (Vin) ist;
- Berechnen (5203) eines Zeitwerts $(_T)$, der die Zeitdifferenz zwischen dem ersten und dem zweiten Zeitpunkt $(t_1, t_2)$ anzeigt;
- aufgrund des besagten Zeitwerts $(_T)$, Berechnen (5204) eines Messwerts (C), der die äquivalente Kapazität der kapazitiven elektrischen Anordnung (10) anzeigt, die elektrisch mit der Erfassungsschaltung (51) verbunden ist.

6. Belüftungsvorrichtung nach Anspruch 4 oder 5, **dadurch gekennzeichnet, dass** das besagte Datenverarbeitungsmittel (520) konfiguriert ist, ein Messverfahren (5300) durchzuführen, einschließlich der folgenden Schritte:

- Erhalten (5301) eines dritten Zeitpunkts $(t_3)$,
bei welchem die Eingangsspannung (Vin), die einen vordefinierten Spannungswert $(V_M)$ aufweist, an dem Eingangsanschluss (511) der besagten Erfassungsschaltung nicht länger empfangen wird;
- Erfassen (5302) eines vierten Zeitpunkts $(t_4)$, zu dem die Ausgangsspannung (Vout) am Ausgangsanschluss (512) der Erfassungsschaltung (51) einen zweiten Spannungsschwellwert $(V_T2)$ erreicht. Der zweite Spannungsschwellwert wird berechnet aufgrund des vordefinierten Spannungswerts $(V_M)$ der Eingangsspannung (Vin) gemäß der folgenden Beziehung $V_T2 = 0.37*V_M$, wobei $V_T2$ der zweite Spannungsschwellwert und $V_M$ der vordefinierte Wert der besagten Eingangsspannung (Vin) ist;
- Berechnung (5303) eines Zeitwerts $(_T)$, der den Zeitunterschied zwischen den besagten dritten und vierten Zeitpunkten $(t_3, t_4)$ anzeigt;
- aufgrund des besagten Zeitwerts $(_T)$, Berechnung (5304) eines Messwerts (C), welcher die äquivalente Kapazität der kapazitiven elektrischen Anordnung (10) anzeigt, die elektrisch mit der besagten Erfassungsschaltung (51) verbunden ist.

7. Belüftungsvorrichtung nach einem oder mehreren der Ansprüche 3 bis 6, **dadurch gekennzeichnet, dass** das Datenverarbeitungsmittel (520) so konfiguriert ist, dass es zweite Messdaten (SL) berechnet, die den Sättigungsgrad der in einem Tank (20) der besagten Belüftungsvorrichtung enthaltenen feuchtigkeitsabsorbierenden Substanz anzeigt, und dies aufgrund der besagten ersten Messdaten (C).

8. Belüftungsvorrichtung nach einem oder mehreren der Ansprüche 3 bis 7, **dadurch gekennzeichnet, dass** die Erfassungsvorrichtung (50) ein Sensorelement (53) umfasst, angepasst, um die von der besagten Erfassungsschaltung (51) bereitgestellte Ausgangsspannung (Vout) am Ausgangsanschluss (512) zu erfassen und Erfassungssignale (S), welche die Ausgangsspannung anzeigen, an die Steuereinheit (52) zu liefern.

9. Belüftungsvorrichtung nach einem oder mehreren der Ansprüche 3 bis 7, **dadurch gekennzeichnet, dass** besagte Steuerungseinheit (52) angepasst ist, direkt Ausgangsspannung (Vout) zu empfangen, die von der besagten Erfassungsschaltung (51) am besagten Ausgangsanschluss (512) bereitgestellt wird.

10. Belüftungsvorrichtung nach einem oder mehreren der Ansprüche 3 bis 9, **dadurch gekennzeichnet, dass** besagte Steuerungseinheit (52) ein Modul zur Spannungserzeugung (525) umfasst, das vom besagten Datenverarbeitungsmittel (520) gesteuert wird und angepasst ist, die Eingangsspannung (Vin) zu erzeugen, die von der besagten Erfassungsschaltung (51) am besagten Eingangsanschluss (511) empfangen wird.

11. Belüftungsvorrichtung nach einem oder mehreren der Ansprüche 3 bis 9, **dadurch gekennzeichnet, dass** besagtes Datenverarbeitungsmittel (520) angepasst ist, direkt die Ausgangsspannung (Vin) zu erzeugen, die von der besagten Erfassungsschaltung (51) am besagten Eingangsanschluss (511) empfangen wird.

12. Belüftungsvorrichtung nach einem oder mehreren der vorigen Ansprüche, **dadurch gekennzeichnet, dass** sie die besagte Erfassungsvorrichtung (50) an Bord angeordnet enthält.

13. Ein elektrischer Leistungsapparat (100) für die Übertragung elektrischer Energie und Verteiler-Installationen, **dadurch gekennzeichnet, dass** er wenigstens eine Belüftungsvorrichtung (1) entsprechend einer oder mehreren der vorigen Ansprüche umfasst.

14. Ein elektrischer Leistungsapparat nach Anspruch 13, **dadurch gekennzeichnet, dass** es ein Leistungs-Umformer ist.

**Revendications**

1.  Dispositif de reniflard (1) pour déshumidifier l'air à fournir dans un vase d'expansion (103) d'un appareil électrique de puissance (100), ledit dispositif de reniflard comprenant une unité de déshumidification de l'air (2) incluant un ou plusieurs réservoirs (2) ayant un volume interne (20) logeant une substance absorbant l'humidité et adaptée pour être en communication fluidodynamique avec l'environnement externe et avec ledit vase d'expansion, **caractérisé en ce qu'**il comprend un ou plusieurs arrangements électriques capacitifs (10) logés dans lesdits un ou plusieurs réservoirs (2), chaque arrangement électrique capacitif comprenant des première et deuxième électrodes (11, 12) disposées de manière espacée l'une de l'autre dans le volume interne (20) d'un réservoir correspondant (2) et une quantité de ladite substance absorbant l'humidité entre lesdites première et deuxième électrodes, ledit dispositif de reniflard comprenant en outre ou pouvant être couplé de manière opérationnelle à un dispositif de détection (50) pouvant être connecté électriquement à l'arrangement électrique capacitif (10) de chaque réservoir (2) et adapté pour fournir des premières données de mesure (CAP) indiquant la capacité équivalente dudit arrangement électrique capacitif.

2.  Dispositif de reniflard, selon la revendication 1, **caractérisé en ce que** ledit dispositif de détection (50) comprend un circuit de détection (51) comprenant:

    - un port d'entrée (511) adapté pour recevoir une tension d'entrée (Vin) provenant d'une source de tension; et
    - un port de sortie (512) pouvant être connecté électriquement aux électrodes (11, 12) de l'arrangement électrique capacitif (10) d'un réservoir (2) et adapté pour fournir une tension de sortie (Vout) en réponse à la réception de ladite tension d'entrée (Vin) auxdites bornes d'entrée; et
    - un circuit résistif (513) connecté électriquement avec ledit port d'entrée et ledit port de sortie (512).

3.  Dispositif de reniflard, selon la revendication 2, **caractérisé en ce que** ledit dispositif de détection (50) comprend une unité de commande (52) adaptée pour fournir la tension d'entrée (Vin) au niveau du port d'entrée (511) dudit circuit de détection (51) et adaptée pour acquérir des données de détection (V2) indicatives de la tension de sortie (Vout) au niveau du port de sortie (512) dudit circuit de détection (51), ladite unité de commande comprenant des moyens de traitement de données (520) configurés pour calculer lesdites premières données de mesure (CAP) sur la base desdites données de détection (V2).

4.  Dispositif de reniflard, selon la revendication 3, **caractérisé en ce que** lesdits moyens de traitement de données (520) sont configurés pour exécuter une ou plusieurs procédures de mesure (5200, 5300) pour calculer lesdites premières données de mesure (CAP), ladite procédure de mesure comprenant le calcul d'une constante de temps ($_T$) caractéristique d'un ensemble de circuit RC comprenant ledit circuit de détection (51) et l'arrangement électrique capacitif (10) connecté électriquement audit circuit de détection.

5.  Dispositif de reniflard, selon la revendication 4, **caractérisé en ce que** lesdits moyens de traitement de données (520) sont configurés pour exécuter une procédure de mesure (5200) comprenant les étapes suivantes:

    - acquérir (5201) un premier instant ($t_1$), auquel la tension d'entrée (Vin) ayant une valeur de tension prédéfinie ($V_M$) est reçue au niveau du port d'entrée (511) dudit circuit de détection;
    - acquérir (5202) un deuxième instant ($t_2$), auquel la tension de sortie (Vout) au niveau du port de sortie (512) dudit circuit de détection (51) atteint une première valeur de seuil de tension ($V_T1$), ladite première valeur de seuil de tension étant calculée sur la base de la valeur de tension prédéfinie ($V_M$) de ladite tension d'entrée (Vin), selon la relation suivante $V_T1 = 0.63^*V_M$, où $V_T1$ est ladite première valeur de seuil de tension et $V_M$ est la valeur prédéfinie de ladite tension d'entrée (Vin);
    - calculer (5203) une valeur de temps ($_T$) indicative de la différence de temps entre lesdits premier et deuxième instants ($t_1$, $t_2$);
    - en se basant sur ladite valeur de temps ($_T$), calculer (5204) une valeur de mesure (C) indicative de la capacité équivalente de l'arrangement électrique capacitif (10) connecté électriquement audit circuit de détection (51).

6.  Dispositif de reniflard, selon la revendication 4 ou 5, **caractérisé en ce que** lesdits moyens de traitement de données (520) sont configurés pour effectuer une procédure de mesure (5300) comprenant les étapes suivantes:

    - acquérir (5301) un troisième instant ($t_3$),

auquel la tension d'entrée (Vin) ayant une valeur de tension prédéfinie ($V_M$) n'est plus reçue au port d'entrée (511) dudit circuit de détection;

- acquérir (5302) un quatrième instant ($t_4$), auquel la tension de sortie (Vout) au niveau du port de sortie (512) dudit circuit de détection (51) atteint une deuxième valeur de seuil de tension ($V_T2$), ladite deuxième valeur de seuil de tension étant calculée sur la base de la valeur de tension prédéfinie ($V_M$) de ladite tension d'entrée (Vin), selon la relation suivante $V_T2 = 0.37*V_M$, où $V_T2$ est ladite deuxième valeur de seuil de tension et $V_M$ est la valeur prédéfinie de ladite tension d'entrée (Vin);

- calculer (5303) une valeur temporelle ($_T$) indicative de la différence de temps entre lesdits troisième et quatrième instants ($t_3$, $t_4$);

- en se basant sur ladite valeur de temps ($_T$), calculer (5304) une valeur de mesure (C) indicative de la capacité équivalente de l'arrangement électrique capacitif (10) connecté électriquement audit circuit de détection (51).

7. Dispositif de reniflard, selon une ou plusieurs des revendications de 3 à 6, **caractérisé en ce que** lesdits moyens de traitement de données (520) sont configurés pour calculer des deuxièmes données de mesure (SL) indicatives du niveau de saturation de la substance absorbant l'humidité contenue dans un réservoir (20) dudit dispositif de reniflard en se basant sur lesdites premières données de mesure (C).

8. Dispositif de reniflard, selon une ou plusieurs des revendications de 3 à 7, **caractérisé en ce que** ledit dispositif de détection (50) comprend un élément capteur (53) adapté pour détecter la tension de sortie (Vout) fournie par ledit circuit de détection (51) au niveau dudit port de sortie (512) et fournir des signaux de détection (S) indicatifs de ladite tension de sortie à ladite unité de commande (52).

9. Dispositif de reniflard, selon une ou plusieurs des revendications de 3 à 7, **caractérisé en ce que** ladite unité de commande (52) est adaptée pour recevoir directement la tension de sortie (Vout) fournie par ledit circuit de détection (51) au niveau dudit port de sortie (512).

10. Dispositif de reniflard, selon une ou plusieurs des revendications de 3 à 9, **caractérisé en ce que** ladite unité de commande (52) comprend un module de génération de tension (525) commandé par ledit moyen de traitement de données (520) et adapté pour générer la tension d'entrée (Vin) reçue par ledit circuit de détection (51) au niveau dudit port d'entrée (511).

11. Dispositif de reniflard, selon une ou plusieurs des revendications de 3 à 9, **caractérisé en ce que** lesdits moyens de traitement de données (520) sont adaptés pour générer directement la tension d'entrée (Vin) reçue par ledit circuit de détection (51) au niveau dudit port d'entrée (511).

12. Dispositif de reniflard, selon une ou plusieurs des revendications précédentes, **caractérisé en ce qu'**il comprend ledit dispositif de détection (50) disposé à bord.

13. Appareil électrique de puissance (100) pour des installations de transmission et de distribution d'énergie électrique, **caractérisé en ce qu'**il comprend au moins un dispositif de reniflard (1), selon une ou plusieurs des revendications précédentes.

14. Appareil électrique de puissance selon la revendication 13, **caractérisé en ce qu'**il s'agit d'un transformateur de puissance.

EP 3 806 114 B1

**FIG. 1**

FIG. 2

FIG. 3

**FIG. 4**

EP 3 806 114 B1

FIG. 5

FIG. 6

EP 3 806 114 B1

5200

5201 → [ ] ←--- $t_1$

5202 → [ ] ←--- $t_2$

5203 → [ ] --→ $\tau$

5204 → [ ] --→ C

**FIG. 7**

FIG. 8

V

$V_M$

$V\tau2$

Vin

Vin

Vout

$t_3$

$t_4$

$\tau$

t

FIG. 9

**EP 3 806 114 B1**

REFERENCES CITED IN THE DESCRIPTION

**Patent documents cited in the description**

- US 20140053723 A1
- EP 3154070 A